# EUROPEAN PATENT SPECIFICATION

(11) **EP 2 967 003 B1**
(45) Date of publication and mention of the grant of the patent: **28.11.2018**
(21) Application number: 14732412.3
(22) Date of filing: 11.03.2014
(51) Int. Cl.: A01K 45/00

(54) **AUTOMATED SYSTEM FOR THE RECOVERY OF DEAD ANIMALS INSIDE THEIR HOUSING PREMISES**
AUTOMATISIERTES SYSTEM ZUR BERGUNG VON TOTEN TIEREN AUF EINER OBERFLÄCHE IN IHREM KÄFIG
SYSTÈME AUTOMATISÉ POUR LA RÉCUPÉRATION D'ANIMAUX MORTS À L'INTÉRIEUR DE LEUR ESPACE DE VIE

(30) Priority: 14.03.2013 IT CR20130010
(43) Date of publication of application: 20.01.2016
(73) Proprietor: Pangea Srl, 46100 Mantova (MN) (IT)
(72) Inventor: DOLARA, Giuseppe, 26023 Grumello Cremonese Ed Uniti (CR) (IT)
(74) Representative: Mari, Marco Giovanni
(86) International application number: PCT/IT2014/000073
(87) International publication number: WO 2014/141313

(56) References cited:
- WO-A1-2005/097576
- WO-A2-2010/087695
- US-A1- 2004 050 338
- US-A1- 2005 186 898

## Description

The invention is intended for the agricultural sector of intensive animal farming.

In detail, the invention concerns an automated system for the recovery of dead animals inside their housing premises, in particular in the context of intensive poultry farming.

Intensive poultry farming aims to meet the growing demand for products of animal origin (in particular meat and eggs), at the same time cutting costs, so as to make this category of products suitable for mass consumption.

The housing used for this type of farming generally consists of rectangular sheds with pitched roof and concrete floor, in which the animals are confined at high stocking density, while complying with animal welfare regulations.

According to prior art, window areas are provided on the side walls to allow light in; to allow air exchange, apertures are present provided with mobile walls, for example made of roll-up curtains to manage said apertures, and large forced ventilation fans which extract the stale air and expel it from the shed.

The animals are fed via tubes through which, at set times of the day, the feed passes and is distributed in movable suspended feed troughs. The water is also distributed by means of a similar method, via suspended tubes provided with special dispensers.

Feed troughs and water dispensers are normally arranged in rows parallel to the main axis of the housing premises.

On the floor a vegetable litter is usually arranged, made of wood shavings, coconut fibre or straw, adapted to collect and incorporate the animal dung.

The litter also provides the bedding, on which the animals can walk and sit in great comfort, without damaging their extremities and the most valuable parts of their body.

For this reason the litter should be kept soft, also by mechanical tilling in order to break up and aerate the litter.

Due to the progressive industrialisation that has characterized farming over the last decades, with a considerable increase in the concentration of animals in each individual farm, the impact of livestock farming in the surrounding territory, for example via emissions into the atmosphere or pollution of the water and of the soil, has become increasingly significant.

It has therefore become of fundamental importance for livestock farming to be managed in such a way as to minimise its potential repercussions both on the environment and on the health of humans and of the animals themselves.

The presence of a livestock farm can in fact result in hygiene and health problems mainly via emissions into the atmosphere of gases, dust, odours, allergens, and the potential spread of pathogens such as viruses and bacteria.

Said substances derive mainly from animal metabolism, from their decomposition and from the processes of biological degradation of the organic substances contained in the dung.

Animal mortality, which in the poultry sector can be as high as 5%, and consequent management of the dead animals that remain inside the premises is a critical aspect for the farmers.

As a matter of fact, dead animals can give rise to microbiological risk if they are not managed correctly (burial, concealment of the carcasses...) and pathogens could be dispersed in the environment, causing zoonosis.

The disposal of dead animals must therefore be constant, prompt and correctly performed.

Currently, to carry out said operation, the farmers must walk through the entire shed every day, checking in all directions to see whether there are any dead animals on the ground.

Having identified said animals, the farmer must load them on a manual means of transport such as a wheelbarrow, for example, or stack them temporarily in a corner of the shed so that they are then moved all at once and taken outside, where they are then stored in suitable refrigerated containers or cold stores while awaiting disposal.

These operations are very long and entail a considerable and prolonged expenditure of time for the farmer.

For example, to search a shed of approximately 1000 m² and clear it of the dead animals can take as long as 1 hour, with all the resulting imaginable drawbacks.

Even more disadvantageously, the farmers are obliged to enter the housing premises daily, favouring the potential spread of pathogenic microorganisms, taken from the inside to the outside of the premises and vice versa, and from one housing premises to another.

A further criticality for the farms is pollution of the air and the production of unpleasant smells caused by decomposition of the dung produced and by poor maintenance of the litter on which the animals lie.

If there is a layer of litter inside the housing premises, its ideal humidity content must be between 15 and 30%. If the litter is too dry, in fact, it will generate a considerable amount of particulate and this causes damage both to the health of the animals and to that of the farmers who operate in the same environment. When the litter is too wet, on the other hand, the animal dung begins to anaerobically decompose, with increase in the production of ammonia, volatile substances and biological gases, and an increase in the odours.

To overcome said drawbacks it is therefore necessary to keep turning the litter, periodically performing mechanical tilling thereof to guarantee the right softness and correct degree of humidity.

For said purpose litter shredding machines are known, comprising a scraper blade which raises the layer of litter from the floor, directing it towards a plurality of rotating cutters which shred it and drop it, in the form of shavings, onto the floor.

Said shredders are motorised and are generally connected to mechanical means, like tractors, in the case of large premises, or pushed by hand by the operators, who usually have to work in a pair, with all the drawbacks listed above connected with the entry and presence of persons in the housing premises.

Even more disadvantageously, these phases of removal of the dead animals and tilling of the litter performed manually do not allow management and control of times and costs, which very often considerably affect expenses, without obtaining any effective benefits.

US-A-2004/0050338 discloses an automated system for the recovery of dead animals lying on a plane positioned inside of an animal farm building comprising a tube rotating around the center of a circular building. Disadvantageously:
- said rotating arm obliges the adoption of a circular shape for the animal farm buildings, which badly uses the space of the building area;
- there isn't the possibility of adapting existing buildings, due to the circularity of system;
- occurs a bad management of the litter, both during collection and distribution, since the arm works mostly at its end, affecting mainly the external part of the building.

The object of the invention is to define a system that automatically and regularly performs inspection of the animal housing premises and removal of the dead animals, together with any tilling of the litter on which the animals lie, if said litter is present, keeping under control the hygiene and health problems typical of intensive animal farming and without significantly affecting farm management costs.

A further object of the invention is to safeguard the health of the animals, and also of the farmers and personnel, minimising their entries and period of time spent inside the premises.

A further object of the invention is to produce a system which is totally automatic, efficient, inexpensive and easy to install, even inside premises which have already been built and are operating.

Said objects are achieved by an automated system for the recovery of dead animals lying on the floor surface inside their housing premises, comprising:
- an automated mobile equipment;
- automation motor means;
- a control unit adapted to supervise the functions of said equipment;
- supply means adapted to supply energy to said equipment,
characterized in that it comprises:
- guide means for said equipment,
wherein said equipment comprises a vehicle and said vehicle comprises:
- locomotion motor means;
- identification means for identifying said dead animals lying on said surface;
- lifting means for lifting said dead animals;
- container means for containing said dead animals;
and wherein said control unit cooperates with said guide means for processing the motion commands for said vehicle, so that said vehicle covers the entire surface of said premises.

According to a first embodiment of the invention, said identification means for identifying dead animals comprise sensors, chosen from pressure sensors, optical sensors, radio impulse sensors, etc.

According to a further embodiment of the invention, said lifting means comprise a displacement belt provided with a plurality of projecting prongs equidistant from one another and adapted to define mobile supports for said dead animals.

According to a further embodiment of the invention, said vehicle comprises abutment means adapted to cooperate with the prongs of said displacement belt, providing means for dropping said dead animals inside said container means.

According to an embodiment of the invention, said prongs comprise a plurality of parallel teeth, adapted to support said dead animals, and said abutment means comprise in turn fixed teeth, adapted to be interposed between said parallel teeth to remove said dead animals from said mobile supports.

In a preferred embodiment of the invention, said vehicle comprises signalling means for moving away the live animals present inside said housing premises prior to the passage of said vehicle.

Advantageously, said vehicle comprises covering and protection walls.

According to a possible embodiment, said vehicle comprises conveying means for conveying said dead animals in the vicinity of said lifting means.

In an even more preferred embodiment of the invention, said vehicle comprises a tilling tool adapted to shred a layer of litter, that may be provided on the surface of said housing premises.

According to further embodiments, said guide means comprise boundary barriers active inside said premises, adapted to emit signals that can be processed by said control unit, to create gangways for the obligatory passage of said vehicle.

In particular, said boundary barriers are arranged in the vicinity of the floor surface of said housing premises.

The system for recovery of dead animals inside their housing premises according to the invention has numerous advantages.

The main advantage derives from the complete automation of the system: the operations for identification and removal of the dead animals lying on a surface no longer have to be performed manually by the operators but are managed entirely by the automated mobile equipment subject of the invention.

Said vehicle moves inside the housing premises according to established trajectories and paths, dictated by said guide means, which advantageously ensure covering of the entire surface of said premises in a given pre-set period of time, for example one day.

Said guide means are pre-set and located so that said vehicle, as it moves, does not run into fixed obstacles, but goes round them, without skipping any area of the housing premises.

The manual interventions by the operators are thus drastically reduced, limited only and exclusively to moving outside the mass of dead animals, now stored in the suitable container means.

In this way, in addition to saving time, energy and costs, the physical wellbeing and health of the farmers is improved since they no longer have to breathe, for several hours, the air laden with gas, dust and bacteria which can form inside said premises.

Even more advantageously, an automated system of this type guarantees that the animals are removed daily, in a constant and certain manner, and that said operation is not influenced by external factors and mishaps.

This results in a general benefit for the farm which also reflects on the health of the animals housed and the quality standard of their meat, which also determines the earnings of the farmer.

The equipment according to the invention is then advantageously completed by accessories which make it even more functional and effective:
- the signalling means for moving away the live animals when the vehicle passes through and the covering and protection walls provided thereon make it extremely safe and there is no danger for the animals moving in the vicinity;
- if a layer of litter functioning as bedding for the animals and collecting their dung is provided inside the premises, the vehicle can be provided with a tilling tool which allows, simultaneously with removal of the dead animals, tilling of said litter, thus maintaining it dry and aerated and reducing degradation thereof, and likewise the emission of toxic gases, both for the animals and the operators.

The advantages of the invention will become more evident in the following description of preferred embodiments of the system and its operation, by way of non-limiting example, and with the help of the figures, wherein:
figures 1-3 show, in a perspective view from different angles, a first possible embodiment of the vehicle of the system according to the invention;
figure 4 shows, in a schematic view, a housing premises provided with guide means for the automated system according to a possible embodiment of the invention;
figures 5 and 6 show, in a perspective view from different angles, a second possible embodiment of the vehicle of the system according to the invention.

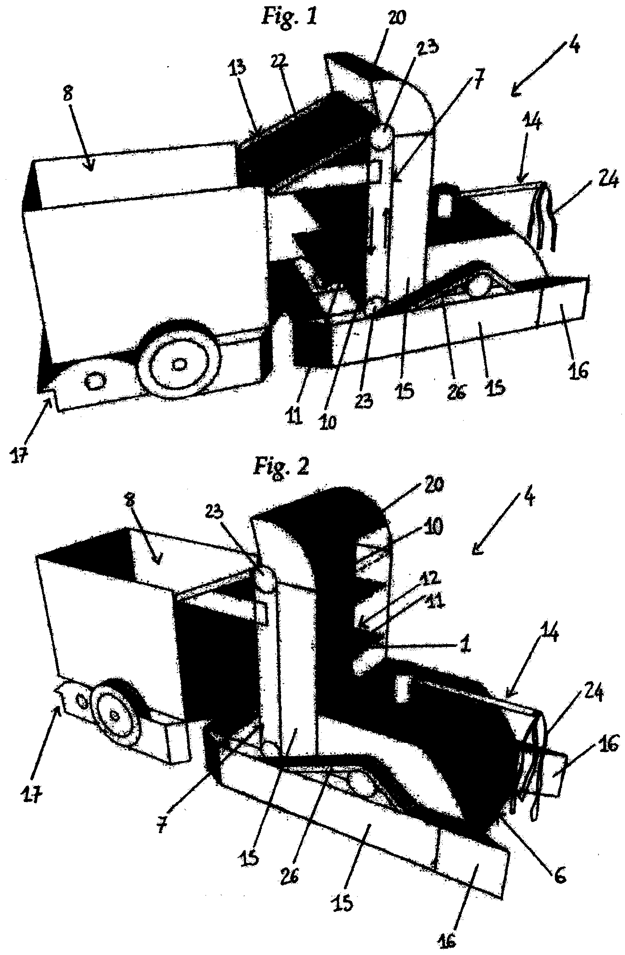

With reference to figures 1-3, an automated mobile equipment 4 is illustrated which provides the automated system for the recovery of dead animals 1 lying on a surface 2 inside the housing premises 3.

Said equipment consists of a vehicle 4 comprising essentially a towing section and a trailer, therefore, in the following description, the term "equipment" is used generically to indicate the vehicle 4.

The towing section is provided with locomotion motor means and automation motor means 23 of the devices present thereon.

Generally, said motor means can be electric, or hydraulic, or pneumatic, or they can comprise a combustion engine, for example.

Said towing section is provided with identification means 6 and lifting means 7 for said dead animals 1, a control unit 9 adapted to supervise the functions of said equipment 4, and supply means adapted to supply energy to said equipment 4.

In the embodiment illustrated in the figures, said motor means, both locomotion and automation, are of electric type and said supply means comprise rechargeable batteries.

Said trailer comprises container means 8 for said dead animals 1, once lifted from the surface where they are lying.

Said identification means 6 for identifying the presence of dead animals 1 are provided at the front of said equipment 4 in the direction of its forward movement and can comprise different types of sensors, such as pressure sensors, optical sensors, radio impulse sensors, etc.

In the embodiments illustrated, said identification means 6 are of mechanical type and comprise pressure sensors provided by means of a mobile wall 19 arranged frontally to said equipment 4 and revolvingly associated therewith.

During movement of the equipment 4, said mobile wall 19 remains in a vertical position whereas it rotates when it comes into contact with a dead animal 1, allowing the animal to pass below and be positioned in the vicinity of the lifting means 7.

Simultaneously, said mobile wall 19 is adapted to generate a signal, which can be processed by said control unit 9, for activation of the lifting means 7.

Said lifting means 7 comprise a displacement belt 10 with a substantially vertical axis.

Said belt 10 is provided transversally, on one face, with a plurality of grid prongs 11, with teeth parallel to one another.

Said prongs 11 are arranged equidistant from one another and define mobile supports 12 for said dead animals 1 while they are being lifted from the floor surface 2 on which they lie.

Said equipment 4 comprises a cover 20 adapted to cover said displacement belt 10.

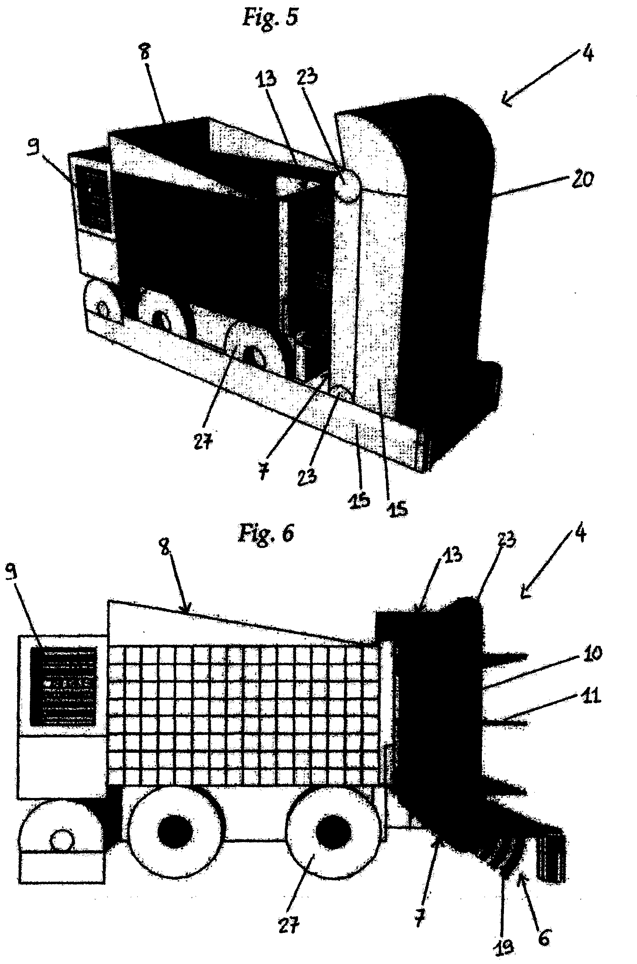

In particular, said cover 20 is adapted to cooperate with the prongs 11 of said belt 10 to define housings 12 for said dead animals 1 and to retain them during the handling thereof. For illustrative purposes only, in Figures 2 and 6 said cover has been made transparent to allow clear display of the component parts of the lifting means 7.

In general, in all the embodiments illustrated, said equipment 4 comprises covering and protection walls 15 having both the function of ensuring safety for the animals 1, and also providing a barrier to the infiltration of dust and dirt inside the equipment 4.

Said equipment 4 comprises a fixed abutment 13 adapted to cooperate with the grid prongs 11 of said displacement belt 10, providing means for dropping said dead animals 1 inside the container means 8 provided on the trailer.

Said fixed abutment 13 is made of an inclined plane 22, permanently associated with the covering walls 15 of said equipment 4 in the vicinity of the top of said displacement belt 10.

Said inclined plane 22 is also a grid and is shaped so as to intercept each dead animal 1 supported by the grid prongs 11 of the belt 10. In particular, the spacing of the grid teeth of the inclined plane 22 is complementary to the position of the teeth of the prongs 11 of the belt 10, so that by interpenetration the dead animal 1 is transferred from the belt surface to the abutment surface.

In some embodiments of the invention, said equipment 4 comprises static or mobile conveying means 16 of said dead animals 1 in the vicinity of said displacement belt 10.

Said conveying means 16 are provided by walls, or rotating means, which extend vertically from the surface of the layer of litter 2 and facilitate positioning of the dead animals 1 at the inlet of said lifting means 7, facilitating their positioning on the prongs 11 of the displacement belt 10.

With particular reference to Figures 1 and 2, said equipment 4 comprises, in the front portion of the towing section, visual signalling means 14 for warning and moving away the live animals inside said housing premises 3 prior to the passage of the equipment, so that they are not accidentally collected and dropped into the container means 8, albeit without danger for the same.

Said signalling means 14 comprise a plurality of fringes 24, positioned on a mobile arm, adapted to attract the attention of the animals, frightening them and causing them to move away, to allow the equipment 4 to pass through undisturbed.

In a particularly advantageous embodiment, if a layer of litter is provided on the floor surface 2 inside the premises 3, said automated equipment 4 comprises a tilling tool 17 adapted to shred the litter.

In this way, one single automated equipment 4 according to the invention is able to perform a dual function: on the one hand collect and dispose of the dead animals 1 and, on the other, turn and shred the layer of litter to aerate it and prevent the humidity of the dung stagnating and generating bad smells and harmful gases.

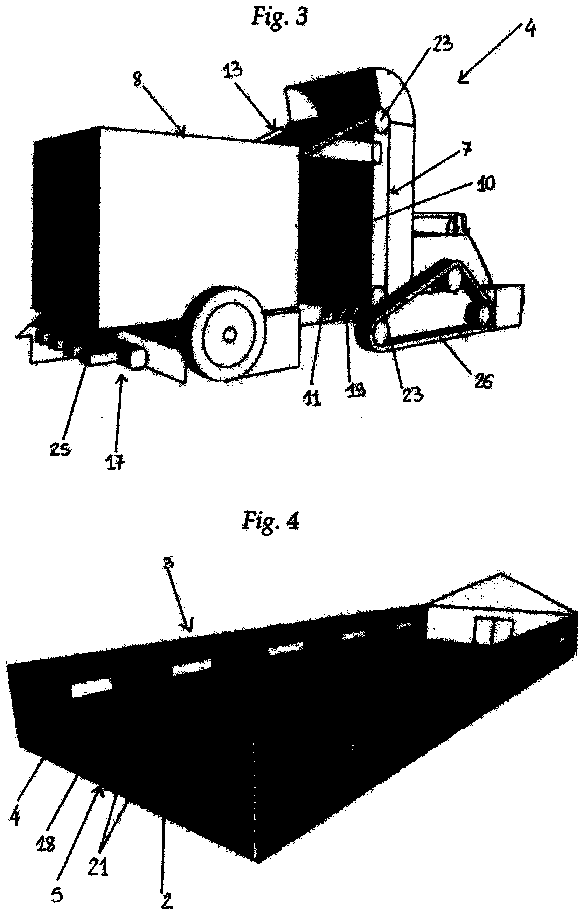

With particular reference to Figure 3, an example of said tilling tool 17 is illustrated.

Said tool 17 comprises a scraper blade which raises the layer of litter from the surface 2, directing it towards a plurality of rotating cutters 25 which shred it and then let it drop onto the surface.

With reference to Figures 1-3, the locomotion motor means that move the towing section of the equipment 4 comprise tracks 26 which, advantageously, guarantee a greater adherence, more effective traction and facilitate steering for easier movement inside the premises 3.

With reference to Figures 5 and 6, on the other hand, said equipment comprises only a towing section on which all the accessory means already described are provided: the identification means 6 and lifting means 7 for said dead animals, the control unit 9, the supply means, the container means 8 for containing the dead animals 1, the tilling tool 17, etc.

In this case the locomotion motor means comprise wheels 27 and no trailer is necessary.

The system according to the invention comprises guide means 5 for said automated equipment 4, adapted to direct the movement of said equipment 4 inside the housing premises 3 so that the entire surface area is covered and worked.

In the particular embodiment illustrated in Figure 4, said guide means 5 comprise boundary barriers, active inside said premises 3, adapted to emit signals that can be processed by said control unit 9 to create gangways 18 for the obligatory passage of said equipment 4.

Said boundary barriers are arranged in the vicinity of the surface 2 of said housing premises 3, and are composed of electric cables 21 adapted to generate a signal when crossed by said equipment 4.

Said signal generated can be processed by said control unit 9 to command in an autonomous manner the change of direction of said equipment 4.

Said electric cables 21 are laid and located on the surface 2 of the housing premises 3, or just below it, creating gangways that do not interfere with the fixed obstacles inside the premises. Said equipment 4, during its movement, therefore goes around any obstacle, but without skipping any area of the housing premises and covering all zones.

The operation of the automated system according to the invention is described below.

The guide means 5 for the automated equipment 4 must be preliminarily positioned inside the housing premises 3.

For example, below the surface 2 of the premises 3, it is possible to lay electric cables 21, able to dialogue with said control unit 9, defining boundary barriers for the movement of said equipment 4.

Said electric cables 21 divide the premises into gangways 18 inside which said equipment 4 moves, forced by said control unit 9.

Once a day, at a set time, the equipment 4 begins its movement inside the premises 3 along said gangways 18.

Whenever said identification means 6 encounter a dead animal 1, they send a signal to said control unit 9 which automatically activates said lifting means 7 via said automation motor means 23.

The dead animal 1 is loaded onto the grid prongs 11 of the displacement belt 10 which is set to the lower position, and remains thereon until the displacement belt 10 is operated again by said control unit 9 in the presence of a further dead animal 1 to be loaded.

As the displacement belt 10 moves and loads the dead animals 1, the equipment 4 automatically discharges said animals into the container means 8.

In a particularly advantageous embodiment of the invention, simultaneously with collection of the animals 1, said equipment 4 provides for tilling of the layer of litter arranged below the animals: during forward movement of the equipment, the tilling tool 17 is always operating, and shreds and renews the layer of litter in complete safety.

Once the path along the gangways 18 has been completed, said equipment 4 is automatically re-set to the starting point inside the premises 3 where, in the battery version, its battery supply means are charged.

At the end of the cycle, the operator only has to take the dead animals 1 out of the container means 8 and dispose of them outside the premises 3.

Once the container means 8 have been emptied and the supply means have been charged, the automated equipment 4 is ready to start a new work cycle.

## Claims

1. An automated system for the recovery of dead animals (1) inside their housing premises (3), lying on a surface (2), comprising:
- an automated mobile equipment (4);
- automation motor means (23);
- a control unit (9) adapted to supervise the functions of said equipment (4);
- supply means adapted to supply energy to said equipment (4),
**characterized in that** it comprises:
- guide means (5) for said equipment (4),
wherein said equipment (4) comprises a vehicle and said vehicle comprises:
- locomotion motor means (26, 27);
- identification means (6) for identifying said dead animals (1) lying on said surface (2);
- lifting means (7) for lifting said dead animals (1);
- container means (8) for containing said dead animals (1);
and wherein said control unit (9) cooperates with said guide means (5) for processing the motion commands for said vehicle, so that said vehicle covers the entire surface of said premises (3).

2. System according to claim 1, **characterized in that** said identification means (6) for the identification of dead animals (1) comprise sensors, chosen from pressure sensors, optical sensors, radio impulse sensors, etc.

3. System according to claim 1, **characterized in that** said lifting means (7) comprise a displacement belt (10) provided with a plurality of projecting prongs (11), equidistant from one another and adapted to define mobile supports (12) for said dead animals (1).

4. System according to claim 1, **characterized in that** said vehicle comprises abutment means (13) adapted to cooperate with the prongs (11) of said displacement belt (10), providing means for dropping said dead animals (1) inside said container means (8).

5. System according to claims 3 and 4, **characterized in that** said prongs (11) comprise a plurality of parallel teeth, adapted to support said dead animals (1), and said abutment means (13) comprise in turn fixed teeth, adapted to be interposed between said parallel teeth to remove said dead animals (1) from said mobile supports (12).

6. System according to claim 1, **characterized in that** said vehicle comprises signalling means (14) for moving away the live animals present inside said housing premises (3) prior to the passage of said equipment.

7. System according to claim 1, **characterized in that** said vehicle comprises covering and protection walls (15).

8. System according to claim 1, **characterized in that** said vehicle comprises conveying means (16) for conveying said dead animals (1) in the vicinity of said lifting means (7).

9. System according to claim 1, **characterized in that** said vehicle comprises a tilling tool (17) adapted to shred a layer of litter that may be provided on the surface (2) of said housing premises (3).

10. System according to claim 1, **characterized in that** said guide means (5) comprise boundary barriers active inside said premises (3), adapted to emit signals which can be processed by said control unit (9), to create gangways (18) for the obligatory passage of said vehicle.

11. System according to claim 10, **characterized in that** said boundary barriers are arranged in the vicinity of the floor surface (2) of said housing premises (3).

## Patentansprüche

1. Automatisches System zur Bergung von toten Tieren (1) in ihren beherbergenden Räumlichkeiten (3), die auf einer Fläche liegen (2), umfassend:
- eine automatische mobile Einrichtung (4);
- automatische Motorvorrichtungen (23);
- eine Steuereinheit (9), geeignet, um die Funktionen der besagten Einrichtung (4) zu überwachen;
- eine Versorgungsvorrichtung, geeignet, um besagte Einrichtung (4) mit
Energie zu versorgen, **dadurch gekennzeichnet, dass** sie Folgendes umfasst:
- Führungsvorrichtungen (5) für besagte Einrichtung (4),
wobei besagte Einrichtung (4) ein Fahrzeug umfasst und besagtes Fahrzeug Folgendes umfasst:
- Fortbewegungsvorrichtungen (26, 27);
- Identifikationsvorrichtungen (6) zur Identifizierung der besagten toten Tiere (1), die auf besagter Fläche (2) liegen;
- Hebevorrichtungen (7) zum Heben der besagten toten Tiere (1);
- eine Containervorrichtung (8) zur Aufnahme der besagten toten Tiere (1);
und wobei besagte Steuereinheit (9) mit besagten Führungsvorrichtungen (5) zusammenarbeitet, um die Bewegungsbefehle für besagtes Fahrzeug zu verarbeiten, so dass besagtes Fahrzeug die gesamte Fläche der besagten Räumlichkeiten (3) deckt.

2. System gemäß Anspruch 1, **dadurch gekennzeichnet, dass** besagte Identifikationsvorrichtungen (6) zur Identifizierung der toten Tiere (1) Sensoren umfassen, ausgewählt aus Drucksensoren, optischen Sensoren, Funk-Impuls-Sensoren, etc.

3. System gemäß Anspruch 1, **dadurch gekennzeichnet, dass** besagte Hebevorrichtungen (7) ein Transportband (10) umfassen, versehen mit einer Vielzahl von ausladenden Gabeln (11), gleichweit voneinander entfernt und geeignet, um mobile Auflagen (12) für besagte tote Tiere (1) zu definieren.

4. System gemäß Anspruch 1, **dadurch gekennzeichnet, dass** besagtes Fahrzeug Auflagevorrichtungen (13) umfasst, geeignet, um mit den Gabeln (11) des besagten Transportbandes(10) zusammenzuarbeiten, indem sie Mittel bereitstellen, um die besagten toten Tiere (1) innerhalb besagter Containervorrichtung (8) fallenzulassen.

5. System gemäß Ansprüchen 3 und 4, **dadurch gekennzeichnet, dass** besagte Gabeln (11) eine Vielzahl von parallel liegenden Zacken umfassen, geeignet, um besagte tote Tiere (1) zu tragen, und besagte Auflagevorrichtungen (13) im Gegenzug feste Zacken umfassen, geeignet, um zwischen besagte parallel liegende Zacken eingeschoben zu werden, um besagte tote Tiere (1) von besagten mobilen Auflagen (12) zu entfernen.

6. System gemäß Anspruch 1, **dadurch gekennzeichnet, dass** besagtes Fahrzeug Signalisierungsvorrichtungen (14) zum Fortbewegen der in besagten Räumlichkeiten (3) anwesenden lebenden Tiere vor dem Durchgang der besagten Einrichtung umfasst.

7. System gemäß Anspruch 1, **dadurch gekennzeichnet, dass** besagtes Fahrzeug eine Abdeckung und Schutzwände (15) umfasst.

8. System gemäß Anspruch 1, **dadurch gekennzeichnet, dass** besagtes Fahrzeug Fördermittel (16) zur Beförderung der besagten toten Tiere (1) in Nähe der besagten Hebevorrichtungen (7) umfasst.

9. System gemäß Anspruch 1, **dadurch gekennzeichnet, dass** besagtes Fahrzeug ein Bearbeitungsgerät (17) umfasst, geeignet, um eine Einstreuschicht zu schreddern, die auf der Fläche (2) der beherbergenden Räumlichkeiten (3) bereitgestellt werden kann.

10. System gemäß Anspruch 1, **dadurch gekennzeichnet, dass** besagte Führungsvorrichtungen (5) innerhalb besagter Räumlichkeiten (3) aktive Abgrenzungsschranken umfassen, geeignet, um Signale auszugeben, die von besagter Steuereinheit (9) verarbeitet werden können, um Durchgänge (18) für die obligatorische Durchfahrt des besagten Fahrzeugs zu schaffen.

11. Ein System gemäß Anspruch 10, **dadurch gekennzeichnet, dass** besagte Abgrenzungsschranken in Nähe der Bodenfläche (2) der besagten beherbergenden Räumlichkeiten (3) angeordnet sind.

## Revendications

1. Système automatisé pour la récupération d'animaux morts (1) à l'intérieur de leur espace de vie (3), gisant sur une surface (2), comprenant :
- une équipement mobile automatisé (4) ;
- des moyens moteurs d'automatisation (23) ;
- une unité de commande (9) prévue pour superviser les fonctions dudit équipement (4) ;
- des moyens d'alimentation prévus pour fournir de l'énergie audit équipement (4),
**caractérisé par le fait qu'**il comprend :
- des moyens de guidage (5) pour ledit équipement (4),
où ledit équipement (4) comprend un véhicule et ledit véhicule comprend :
- des moyens moteurs de locomotion (26, 27) ;
- des moyens d'identification (6) pour l'identification desdits animaux morts (1) gisant sur ladite surface (2) ;
- des moyens de levage (7) pour le levage desdits animaux morts (1) ;
- des moyens conteneurs (8) pour contenir lesdits animaux morts (1) ;
et où ladite unité de commande (9) coopère avec lesdits moyens de guidage (5) pour traiter les commandes de mouvement pour ledit véhicule, de sorte que ledit véhicule couvre toute la surface desdits espaces de vie (3).

2. Système selon la revendication 1, **caractérisé par le fait que** lesdits moyens d'identification (6) pour l'identification des animaux morts (1) comprennent des capteurs, choisis parmi des capteurs de pression, des capteurs optiques, des capteurs d'impulsion radio, etc.

3. Système selon la revendication 1, **caractérisé par le fait que** lesdits moyens de levage (7) comprennent une bande de déplacement (10) dotée d'une multitude de broches en saillie (11), équidistantes les unes des autres et prévues pour définir des supports mobiles (12) pour lesdits animaux morts (1).

4. Système selon la revendication 1, **caractérisé par le fait que** ledit véhicule comprend des moyens de butée (13) prévus pour coopérer avec les broches (11) de ladite bande de déplacement (10), fournissant des moyens pour faire tomber lesdits animaux morts (1) à l'intérieur desdits moyens conteneurs (8).

5. Système selon les revendications 3 et 4, **caractérisé par le fait que** lesdites broches (11) comprennent une multitude de dents parallèles, prévues pour soutenir lesdits animaux morts (1), et lesdits moyens de butée (13) comprennent à leur tour des dents fixes, prévues pour être intercalée entre lesdites dents parallèles pour retirer lesdits animaux morts (1) desdits supports mobiles (12).

6. Système selon la revendication 1, **caractérisé par le fait que** ledit véhicule comprend des moyens de signalisation (14) pour écarter les animaux vivants présents dans lesdits espaces de vie (3) avant le passage dudit équipement.

7. Système selon la revendication 1, **caractérisé par le fait que** ledit véhicule comprend des parois de couverture et de protection (15).

8. Système selon la revendication 1, **caractérisé par le fait que** ledit véhicule comprend des moyens de transport (16) pour convoyer lesdits animaux morts (1) à proximité desdits moyens de levage (7).

9. Système selon la revendication 1, **caractérisé par le fait que** ledit véhicule comprend un outil de labour (17) prévue pour déchiqueter une couche de litière qui peut être fournie sur la surface (2) desdits espaces de vie (3).

10. Système selon la revendication 1, **caractérisé par le fait que** lesdits moyens de guidage (5) comprennent des barrières de limite actives à l'intérieur desdits espaces de vie (3), prévues pour émettre des signaux qui peuvent être traité par ladite unité de commande (9), afin de créer des couloirs (18) pour le passage obligatoire dudit véhicule.

11. Système selon la revendication 10, **caractérisé par le fait que** lesdites barrières de limite sont disposées à proximité de la surface du sol (2) desdites espaces de vie (3).
